# EUROPEAN PATENT SPECIFICATION

(11) **EP 0 620 129 B1**
(45) Date of publication and mention of the grant of the patent: **09.10.1996**
(21) Application number: 94302680.7
(22) Date of filing: 14.04.1994
(51) Int. Cl.: B60C 9/18

(54) **A pneumatic tyre**
Ein Luftreifen
Un bandage pneumatique

(30) Priority: 16.04.1993 JP 113695/93
(43) Date of publication of application: 19.10.1994
(73) Proprietor: Sumitomo Rubber Industries Ltd., Kobe-shi, Hyogo-ken (JP)
(72) Inventor: Terada, Minoru, Kobe-shi,Hyogo-ken (JP)
(74) Representative: Stewart, Charles Geoffrey

(56) References cited:
- EP-A- 0 066 225
- EP-A- 0 133 876
- EP-A- 0 280 442
- EP-A- 0 300 779
- EP-A- 0 326 123
- DE-A- 3 010 679
- US-A- 5 164 028

## Description

The present invention relates to a pneumatic tyre preferably usable on a four-wheel drive vehicle, providing in particular reduced pass-by noise without sacrificing performance on a snow-covered road.

Tyre noise reduction is keenly demanded recently, as can be seen in EP-A-0 300 779, corresponding to the preamble of claim 1, and to decrease pass-by noise, it has been suggested in the past to reduce the hardness of the topping rubber of the belt or the tread rubber, or to decrease the volume of the tread pattern grooves.

However, when the hardness of the topping rubber of the belt is decreased, the constraining force of the belt layer decreases, and cornering power is lowered, which results in deterioration of steering stability. Also decreasing the hardness of the tread rubber is also limited by steering stability, and the pass-by noise cannot be decreased sufficiently.

Furthermore, when the groove volume is decreased, the grip performance and braking performance may be sacrificed especially when travelling snow-covered roads, and hence it cannot be used practicably in a snow tyre or a M+S (mud and snow) tyre.

On the other hand, pass-by noise is generated when the resonant sound caused in the air column between the road surface and the grooves is transmitted in the air, and also when the vibration caused by the tyre contacting the ground is transmitted from the tread to the sidewall. In the latter case, members such as tread rubber, the belt reinforcement and the sidewall rubber are individually able to easily transmit the frequency range. Thus, to reduce the pass-by noise, it is necessary to lower the sound pressure level in the frequency region of 800 Hz to 1 kHz, and the present inventor discovered that the member particularly effective at transmitting the vibration in this frequency region is the belt layer. That is, he found that suppression of generation of vibration in the belt layer contributes greatly to reduction of pass-by noise. Also, he found that the vibration of the belt layer is suppressed by placing a harder rubber layer between the belt and carcass than the topping rubber.

It is hence a primary object of the invention to present a pneumatic tyre capable of effectively lowering the sound pressure level in the frequency region of 800 Hz to 1 kHz

According to the present invention, a pneumatic tyre comprises a carcass composed of at least one carcass ply extending from a tread part through sidewalls and folded around a bead core of a bead part, and a belt layer disposed radially outside the carcass and composed of two belt plies laid inside and outside in the radial direction, characterised by a vibration resistant rubber layer disposed between the inner belt ply and the carcass ply, wherein the outer belt ply width WB1 which is the distance between the outer edges in the axial direction of the outer belt ply is 80 to 90% of the tread width WT, the inner belt ply width WB2 of the inner belt ply is greater than the outer ply width WB1 and is 90 to 100% of the tread width WT, and the vibration resistant rubber layer has a JISA hardness greater by 3 to 30 degrees than the topping rubber of the carcass ply and the inner and outer belt plies, a thickness T of 0.9 to 2.5mm and a rubber width WR which is the distance between the outer edges in the axial direction of 0.6 to 1.1 times the inner ply width WB2.

Preferably the vibration resistant rubber layer has a complex modulus of elasticity E* in the range of 55 to 65 kg/cm² and loss tangent tan δ of 0.05 to 0.15.

The vibration frequency region of the belt layer is known to be 800 Hz to 1 kHz, and the deformation and vibration of the belt layer is decreased by the provision of the vibration resistant rubber layer. As a result, the sound pressure level in the above frequency region becomes lower, thereby decreasing the noise.

Since the JISA hardness of the topping rubber of carcass and belt layer is set at an ordinary level of about 50 to 60 degrees and the groove volume is not decreased, the steering stability and other tyre performance factors are not sacrificed even in the snow tyre or M+S tyre and therefore the pneumatic tyre of the invention may be preferably applied on a four-wheel drive vehicle for running on rough ground.

By setting the JISA hardness of the vibration resistant rubber layer 3 to 30 degrees greater than that of the topping rubber, the vibration of the belt layer can be suppressed effectively. If less than 3 degrees greater, deformation of the belt layer is not suppressed sufficiently, or if made greater than 30 degrees, the rigidity of the tread is excessively large, and the pass-by noise cannot be reduced.

The thickness T of the vibration resistant rubber layer is set at 0.9 to 2.5 mm. If the thickness T is less than 0.9 mm, the vibration of the belt layer cannot be suppressed sufficiently, and if exceeding 2.5 mm, the tyre weight increases, and it is difficult to keep uniform the gauge distribution which is the thickness of the tread part.

The width WR of the vibration resistant rubber layer is set at 0.6 to 1.1 times the inner belt ply width WB2. If the rubber width WR is less than 0.6 times, the vibration of belt layer cannot be suppressed sufficiently, or if greater than 1.1 times, to the contrary, the gauge distribution of the tread part tends to be uneven.

An embodiment of the present invention will now be described, by way of example, referring to the attached diagrammatic drawings, in which;

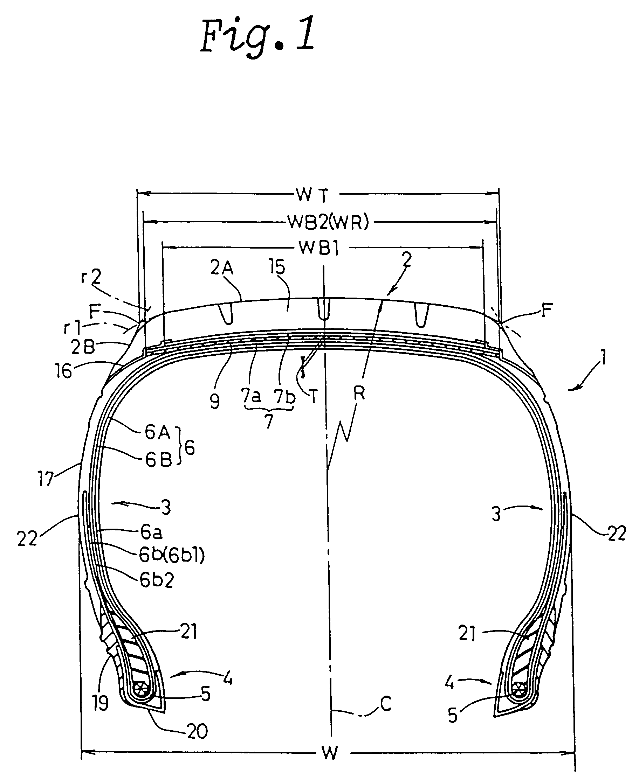

Fig. 1 is a meridian sectional view of tyre in an embodiment of the invention.

The pneumatic tyre 1 comprises a carcass 6 extending between two bead cores 5, a belt layer 7 disposed radially outside the carcass 6, and a vibration resistant rubber layer 9 disposed between the belt 7 ply and the carcass 6.

The carcass 6 has a toroidal main body 6a extending from a tread part 2 to bead parts 4 through sidewalls 3 and a pair of folded parts 6b folded up from the inside to the outside in the tyre's axial direction around the bead core 5 of the bead part 4. The carcass 6 consists of one or more carcass plies in this embodiment, two carcass plies 6A,6B comprising cords inclined at an angle of 75 to 90 degrees to the tyre equator C and covered with topping rubber the JISA hardness of which is 50 to 60 degrees. The carcass cords may be made of nylon, rayon, polyester, aromatic polyamide or other organic fibre cords.

An outer edge of the folded part 6b1 of the carcass ply 6A is located slightly outwards of the maximum width point 22 of the tyre maximum width W, for example 5mm. The folded part 6b2 of the carcass ply 6B tightly overlays on the folding part 6b1, and its outer edge is located slightly inwards of the maximum width point 22, for example 10 mm.

Between the main body part 6a of the carcass 6 and the folded part 6b, a bead apex rubber 21 approximately triangular in cross sectional shape extends radially outwards from the bead core 5.

The belt layer 7, disposed radially outside the carcass 6 under the tread part 2, is composed of inner and outer belt plies 7a, 7b laid inside and outside in the tyre's radial direction. Each belt ply 7a, 7b comprises belt cords disposed at an inclination of 10 to 85 degrees, more preferably 10 to 45 degrees, to the tyre equation C. The belt cords are covered with topping rubber with having a JISA hardness of 50 to 60 degrees and intersect between the belt plies 7a, 7b. As the belt cord, aside from steel cord, organic fibre cord of high tensile strength such as aromatic polyamide may be also used.

The outer belt ply width WB1 which is the length between outer edges in the tyre's axial direction of the outer belt ply 7b is 80 to 90% of the tread width WT. The inner belt ply width WB2 of the inner belt ply 7a is larger than the outer ply width WB1 and is 90 to 100% of the tread width WT.

Herein, the tread width WT is defined as the length in the tyre's axial direction between intersections F, F of a virtual line r1 extending a tread surface 2A smoothly from an outer end of the tread surface 2A, and a virtual line r2 extending a buttress surface 2B smoothly from an outer end in the tyre's radial direction of the buttress surface 2B.

A tread rubber 15 for tread part 2 is disposed radially outside the belt layer 7. The tread surface 2A is the radially outer surface of the tread rubber 15, and the concave buttress surface 2B is formed as a side surface of the tread rubber 15. A profile of a tread surface 2A on the tyre meridian section has a centre on the tyre equator C, and nearly coincides with a single arc of which radius of curvature R is 1.0 to 2.5 times the tyre maximum width W.

A sidewall rubber 17 for the sidewall 3 is disposed outside the carcass 6 in the tyre's axial direction and a radially outer edge of the sidewall rubber 17 is joined to the tread rubber 15 by an adhesive layer 16.

The adhesive layer 16 is composed of rubber material having an intermediate hardness of the tread rubber 15 and the sidewall rubber 17, and covers the outer edge in the axial direction of the belt layer 7.

A bead rubber 19 is disposed at the outside of the carcass 6 in the axial direction for the bead part 4, and is joined to the radially inner edge of the sidewall rubber 17. A bead reinforcing layer 20 of organic fibres cords for preventing damage of the bead part 4 due to fitting to a wheel rim is disposed from the bottom of the bead part 4 to the inside in the axial direction.

The vibration resistant rubber layer 9 is disposed between the inner belt ply 7a and the carcass ply 6B. The vibration resistant rubber layer 9 contacts the inner surface of the inner belt ply 7a in its overall length. But, in this embodiment, an outer end of the vibration resistant rubber layer 9 in the axial direction is gradually parted from the outer surface of the carcass ply 6B so as to provide a triangular shaped space, which is filled with sidewall rubber 17.

The JISA hardness of the vibration resistant rubber layer 9 is set to be 3 to 30 degrees greater in hardness than the JISA hardness of each of the topping rubbers of the belt plies 7a, 7b and the carcass plies 6A, 6B.

The thickness T of the vibration resistant rubber layer 9 is set at 0.9 to 2.5 mm in its overall length.

The rubber width WR which is the distance between the outer edges in the axial direction of the vibration resistant rubber layer 9 is set at 0.6 to 1.1 times the inner ply width WB2. In this embodiment, the rubber width WR is set almost the same as the inner ply width WB2.

By this vibration resistant rubber layer 9, vibration and deformation of the belt layer 7 in use of the tyre is suppressed, and the sound pressure level in the frequency region of 800 to 1 kHz which the inventor found is mainly caused by the belt layer 7 is decreased, so that the pass-by noise is reduced. Therefore, the deformation of the belt layer 7 is suppressed by setting the JISA hardness of the vibration resistant rubber layer 9 at 3 to 30 degrees greater than that of the topping rubber, or more preferably 5 to 25 degrees, or even more preferably 10 to 15 degrees larger.

Also, the vibration resistant rubber layer 9 has a complex modulus of elasticity E* which is 55 to 65 kg/cm² and a loss tangent tan δ being 0.05 to 0.15. By setting the complex modulus of elasticity E* and loss tangent δ within the above mentioned ranges, separation from the carcass 6 and belt layer 7 is suppressed. The complex modulus of elasticity E * loss tangent δ were measured at a temperature of 70 deg. C, an initial strain of 10%, a frequency of 10 Hz, and an amplitude of 2% by a viscoelasticity spectrometer manufactured by Iwamoto Seisakusho.

Meanwhile, the JISA hardness of the belt layer 7, the JIS hardness A of the tread rubber 15, and the groove volume of the tread pattern provided in the tread surface 2A are same as in the prior art, and hence the tyre performance factors such as steering stability is maintained.

Tyres of a size of 215/80R16 and composed as shown in Fig. 1 (Embodiments 1, 2) were experimentally fabricated to the specification shown in Table 1, and their performance (pass-by noise level, steering stability) was tested. At the same time, a tyre without vibration resistant rubber 9 (Comparison 1), and tires out of the composition of the invention (Comparisons 2, 3) were similarly tested and the performances were compared. The composition of the vibration resistant rubber applied to the examples 1 ,2 and Comparisons 2, 3 is shown in Table 2.

The test methods were as follows.

### 1) Pass-by noise level

The test was executed by a vehicle meandering test as specified in JASO C606, and on the linear test course. The vehicle with the test tires was driven zigzag for a distance of 50 m at a passing speed of 53 km/h, and in the middle point of the test course, the pass-by noise was measured by a stationary microphone installed at a height of 1.2 m above the test road surface, at a distance of 7.5 m laterally from the centre line of tread, and the maximum pass-by noise level was expressed in dB (A) unit.

### 2) Steering stability

Driver's feeling of an actual vehicle was judged, and the result was expressed as an index with Comparison 1 set at 100. A greater figure means a better result, and the approval level is 100 or more.

The test results are shown in Table 1.

As a result of the test, the Embodiments compared to the Comparisons show a maximum pass-by noise level reduced by about 0.8 to 1.8 dB (A) without sacrificing steering stability.

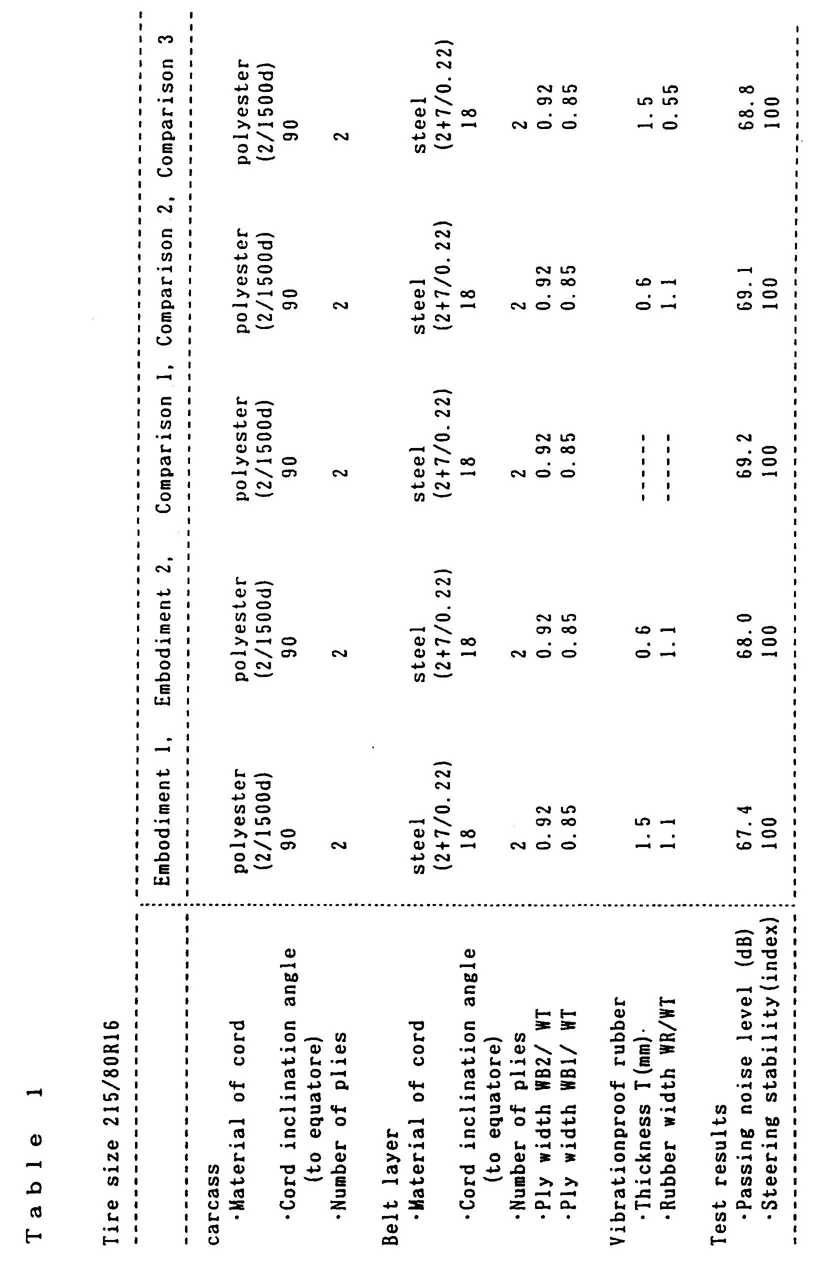

**Table 2**

| Composition of vibrationproof rubber (Weight parts) | |
|---|---|
| NR-rubber | 75 |
| SBR-rubber (1502) | 25 |
| Carbon black (HAF) | 45 |
| Aromatic oil | 10 |
| Stearic acid | 2 |
| Zinc white | 5 |
| Sulfur | 3.0 |
| Promoter | 1.5 |
| PV1 | 0.2 |
| 100% modulus (kg/cm²) | 23 |
| Complex modulus of elasticity E* (kg/cm²) | 46.8 |
| Loss tan (degree) | 0.12 |
| Loss modulus E' (kg/cm²) | 5.53 |
| Loss compliance (cm²/kg) | 2.52 x10⁻³ |
| ΔE* (degree) | 6.50 |

## Claims

1. A pneumatic tyre comprising a carcass (6) composed of at least one carcass ply (6A,6B) extending from a tread part (2) through sidewalls (3) and folded around a bead core (5) of a bead part (4), and a belt layer (7) disposed radially outside the carcass (6) and composed of two belt plies (7a,7b) overlaid inside and outside in the radial direction characterised by a vibration resistant rubber layer (9) disposed between the inner belt ply (7a) and the carcass ply (6), wherein the outer belt ply width WB1 which is the distance between the outer edges in the axial direction of the outer belt ply (7b) is 80 to 90% of the tread width WT, the inner belt ply width WB2 of the inner belt ply (7a) is greater than the outer ply width WB1 and is 90 to 100% of the tread width WT, and the vibration resistant rubber layer (9) has a JISA hardness greater by 3 to 30 degrees than the topping rubber of the carcass ply (6) and the inner and outer belt plies (7a,7b), a thickness T of 0.9 to 2.5 mm and a rubber width WR which is the distance between the outer edges in the axial direction of 0.6 to 1.1 times the inner ply width WB2.

2. A pneumatic tyre according to claim 1, characterised in that the vibration resistant rubber layer (9) has a complex modulus of elasticity E* of 55 to 65 kg/cm² and a loss tangent tan δ of 0.05 to 0.15.

## Patentansprüche

1. Ein Luftreifen mit einer Karkasse (6), die aus wenigstens einer Karkassenlage (6A, 6B) besteht, die sich von einem Laufflächenteil (2) durch Seitenwände (3) erstreckt und um einen Wulstkern (5) eines Wulstteils (4) herumgefaltet ist, und einer Gürtelschicht (7), die radial außerhalb der Karkasse (6) angeordnet ist und aus zwei Gürtellagen (7a, 7b) besteht, die in der Radialrichtung innenseitig und außenseitig übereinandergelegt sind,
**gekennzeichnet** durch
eine schwingungsfeste Gummischicht (9), die zwischen der inneren Gürtellage (7a) und der Karkassenlage (6) angeordnet ist, worin die Breite WB1 der äußeren Gürtellage, die der Abstand zwischen den Außenkanten der äußeren Gürtellage (7b) in der Axialrichtung ist, 80 bis 90% der Laufflächenbreite WT ist, die Innengürtellagenbreite WB2 der inneren Gürtellage (7a) größer ist als die Breite WB1 der äußeren Lage ist und 90 bis 100% der Laufflächenbreite WT ist, und die schwingungsfeste Gummischicht (9) eine JISA-Härte, die um 3 bis 30° höher ist als das Deckgummi der Karkassenlage (6) und der inneren und äußeren Gürtellagen (7a, 7b) ist, eine Dicke T von 0,9 bis 2,5 mm und eine Gummibreite WR, die der Abstand zwischen den Außenkanten in der Axialrichtung ist, vom 0,6 bis 0,1-fachen der Innenlagenbreite WB2 hat.

2. Ein Luftreifen nach Anspruch 1,
dadurch **gekennzeichnet,**
daß die schwingungsfeste Gummischicht (9) einen komplexen Elastizitätsmodul E* von 55 bis 65 kg/cm² und eine Verlustziffer tan δ von 0,05 bis 0,15 hat.

## Revendications

1. Pneumatique comprenant une carcasse (6) composée d'au moins une nappe (6A, 6B) de carcasse partant d'une partie (2) de bande de roulement dans des flancs (3) et repliée autour d'une tringle (5) d'une partie de talon (4), et une couche de ceinture (7) disposée radialement à l'extérieur de la carcasse (6) et composée de deux nappes (7a, 7b) de ceinture qui se recouvrent à l'intérieur et à l'extérieur en direction radiale, caractérisé par une couche (9) de caoutchouc résistant aux vibrations, disposée entre la nappe interne (7a) de ceinture et la nappe (6) de carcasse, la largeur WB1 de la nappe externe de ceinture, qui est la distance comprise entre les bords externes dans la direction axiale de la nappe externe (7b) de ceinture étant comprise entre 80 et 90 % de la largeur WT de la bande de roulement, la largeur WB2 de la nappe interne de ceinture (7a) étant supérieure à la largeur WB1 de la nappe externe et étant comprise entre 90 et 100 % de la largeur WT de la bande de roulement, et la couche (9) de caoutchouc résistant aux vibrations a une dureté JIS A supérieure de 3 à 30° à celle du caoutchouc d'enrobage de la nappe (6) de carcasse et des nappes interne et externe de ceinture (7a, 7b), une épaisseur T comprise entre 0,9 et 2,5 mm, et une largeur WR de caoutchouc, qui est la distance comprise entre les bords externes, dans la direction axiale, comprise entre 0,6 et 1,1 fois la largeur WB2 de la nappe interne.

2. Pneumatique selon la revendication 1, caractérisé en ce que la couche (9) de caoutchouc résistant aux vibrations a un module complexe d'élasticité E* compris entre 55 et 65 kg/cm² et une tangente à l'angle de pertes tgδ comprise entre 0,05 et 0,15.
